# FASCICULE DE BREVET EUROPEEN

(11) **EP 2 873 611 B1**
(45) Date de publication et mention de la délivrance du brevet: **25.05.2016**
(21) Numéro de dépôt: 14193388.7
(22) Date de dépôt: 17.11.2014
(51) Int. Cl.: B64C 25/40

(54) **Roue d'aéronef équipée de moyens de son entraînement en rotation par un actionneur d'entraînement**
Rad eines Luftfahrzeugs, das mit Mitteln zu seinem Drehantriebs über ein Antriebsstellglied ausgestattet ist.
Aircraft wheel provided with means for the rotational driving thereof by means of a driving actuator

(30) Priorité: 15.11.2013 FR 1361230
(43) Date de publication de la demande: 20.05.2015
(73) Titulaire: Messier-Bugatti-Dowty, 78140 Vélizy-Villacoublay (FR)
(72) Inventeur: Mazarguil, Nicolas, 78140 VELIZY-VILLACOUBLAY (FR)
(74) Mandataire: Parzy, Benjamin Alain

(56) Documents cités:
- EP-A1- 2 361 830
- EP-A2- 2 639 160
- US-A- 3 977 631

## Description

L'invention concerne une roue d'aéronef équipée de moyens de son entraînement en rotation par un actionneur d'entraînement.

### ARRIERE-PLAN TECHNOLOGIQUE DE L'INVENTION

Il a été récemment reconnu l'avantage de motoriser les roues d'un aéronef pour pouvoir déplacer celui-ci sans l'aide de ses propulseurs. A cet égard, on connaît des roues d'aéronef munies de moyens de leur entraînement en rotation par un actionneur d'entraînement rapporté sur la partie basse de l'atterrisseur. Ces moyens d'entraînement comprennent une couronne dentée ramenée de façon rigide sur la jante de la roue. Récemment, il a été proposé dans le document EP 2 639 160 d'atteler une couronne dentée à une jante de roue par l'intermédiaire d'organes d'attelage présentant des jeux aptes à permettre un mouvement relatif entre la couronne dentée et la jante de la roue. La couronne dentée est rapportée sur des chapes s'étendant d'un flanc d'une jante de la roue. Ces dispositions nécessitent de fabriquer des roues spécifiques qui doivent être certifiées pour être utilisables sur des aéronefs déjà en service.

### OBJET DE L'INVENTION

L'invention a pour objet une roue d'aéronef munie de moyens de son entraînement en rotation rapporté sur la roue, de construction simplifiée.

### PRESENTATION DE L'INVENTION

En vue de la réalisation de ce but, on propose une roue d'aéronef pourvue de moyens d'entraînement en rotation , les moyens d'entraînement comportant une couronne d'entraînement associée à des moyens d'attelage de la couronne à une jante de la roue, dans laquelle, selon l'invention, les moyens d'attelage sont fixés à des chapes de la jante qui servent par ailleurs à maintenir des barrettes de freins amovibles équipant la jante.

Ainsi, on profite de l'existence, sur les roues freinées de chapes servant à maintenir les barrettes de frein (ces éléments servent à solidariser en rotation la jante de la roue et les disques rotors du frein) pour y rapporter les organe d'attelage de la couronne, de sorte qu'il est possible d'utiliser des roues existantes sans modification ni effort particulier de certification, car l'introduction du couple d'entraînement en rotation dans la roue se fait sensiblement au même niveau que l'introduction du couple de freinage, et le couple d'entraînement est bien moins important que le couple de freinage qui dimensionne la roue.

### PRESENTATION DES FIGURES

L'invention sera mieux comprise à la lumière de la description qui suit d'un mode particulier de réalisation non limitatif de l'invention, en référence aux figures des dessins annexés parmi lesquelles :
- la figure 1 est une vue en perspective partielle d'une jante de roue d'aéronef montrant l'attelage des moyens d'entraînement selon un premier mode de réalisation de l'invention ;
- la figure 2 est une vue en perspective d'un organe d'attelage des moyens d'entraînement à la jante de la figure 1 ;
- la figure 3 est une vue éclatée de l'organe d'attelage de la figure 2 ;
- la figure 4 est une vue en perspective d'une jante de roue d'aéronef montrant l'attelage des moyens d'entraînement selon un deuxième mode de réalisation de l'invention.

### DESCRIPTION DETAILLEE D'UN MODE DE REALISATION DE L'INVENTION

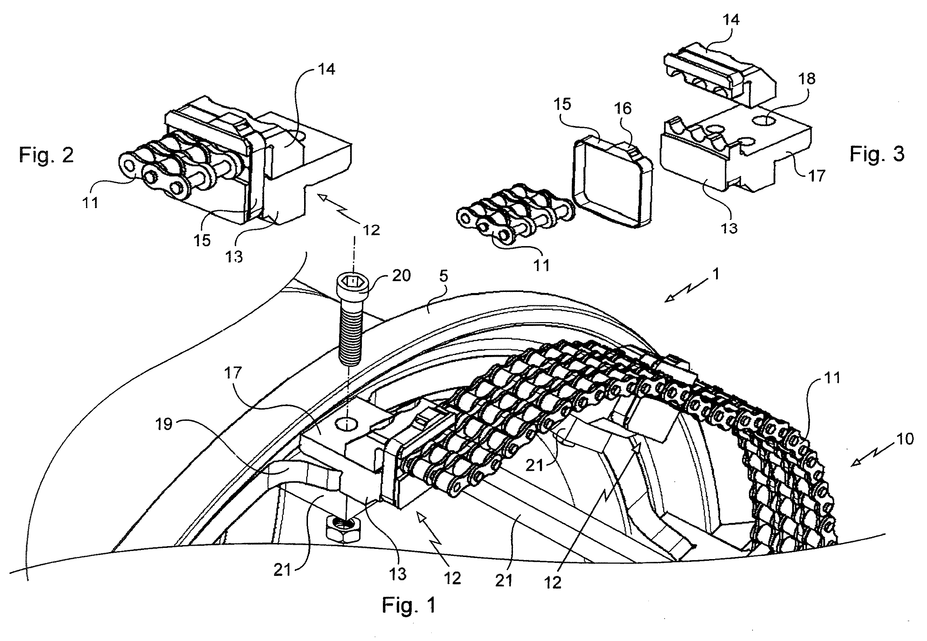

A la figure 1 est illustrée une jante 5 de roue d'aéronef destinée à recevoir un pneumatique (non représenté), ainsi que des disques d'un frein. Les disques s'étendent à l'intérieur de la jante, et certains de ces disques (les disques rotors) sont entraînés en rotation avec la jante par l'intermédiaire de barrettes 21.

La roue est équipée de moyens d'entraînement en rotation 10 qui comportent ici une chaîne 11 conformée en couronne (ici une chaîne à trois pistes) qui est solidarisée à la jante 5 par des organes d'attelage 12.

Comme cela est plus particulièrement visible sur les figures 2 et 3, chaque organe d'attelage 12 comprend ici une mâchoire interne 13 et une mâchoire externe 14 qui possèdent des dentures conformées pour pénétrer de part et d'autres de maillons de l'une des pistes externes de la chaîne 11, et ainsi enserrer lesdits maillons. Les mâchoires 13,14 sont maintenues en position serrée sur la chaîne 11 par un ligament 15 muni de moyens de serrage 16. Alternativement, on pourra utiliser tout autre moyen de maintien des deux mâchoires en position sur la chaîne, comme des vis. La mâchoire inférieure 13 est prolongée par une patte 17 munie d'un orifice 18 qui permet sa fixation à une chape 19 de la jante 5 qui s'étend en saillie d'un flanc de celle-ci, au moyen d'un boulon 20.

Conformément à l'invention, chacune des pattes 17 est rapportée directement sur une chape 19 de la jante 5 qui s'étend en saillie d'un flanc de celle-ci et qui sert par ailleurs à la fixation d'une barrette de frein 21 qui sert à l'entraînement en rotation de disques de frein rotors (non représentés ici). Ici, un même boulon 20 fixe à la fois la patte d'un des organes d'attelage et une barrette de frein sur l'une des chapes de la jante.

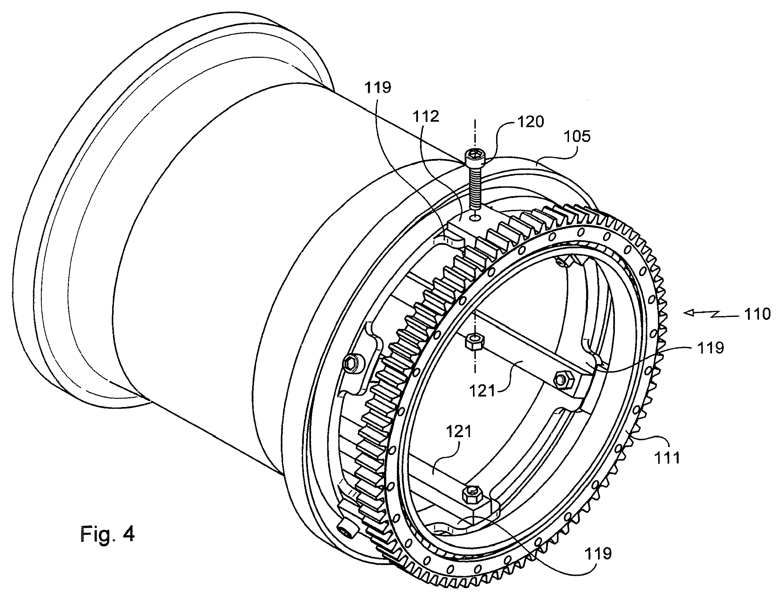

A la figure 4, la jante 105 de la roue d'aéronef est équipée de moyens d'entraînement en rotation 110 comportant une couronne dentée 111 (rigide) comportant des organes d'attelage 112 venus ici de matière avec la couronne. Conformément à l'invention, les organes d'attelage 112 sont directement rapportés sur l'une des chapes 119 de la jante 105 qui s'étend en saillie d'un flanc de celle-ci et qui sert par ailleurs à la fixation d'une barrette de frein 121 assurant l'entraînement en rotation de disques de frein rotors (non représentés ici).

Ici, un même boulon 120 fixe à la fois l'un des organes d'attelage et une barrette de frein sur l'une des chapes de la jante.

Dans les deux exemples illustrés ici, la couronne des moyens d'entraînement est destinée à coopérer avec un pignon d'entraînement d'un organe d'actionnement porté par l'atterrisseur sur laquelle la roue est montée pour tourner.

Ainsi, la fixation des moyens d'entraînement au moyen des chapes servant par ailleurs à maintenir les barrettes de frein permet l'utilisation de jantes standards, déjà certifiées, sans aucune modification. De plus, si de nouvelles jantes doivent être créées, l'invention permet une simplification certaine de la jante comparée à celle du document EP 2 639 160 par la diminution du nombre de chapes de fixation.

L'invention n'est pas limitée à ce qui vient d'être décrit, mais englobe au contraire toute variante entrant dans le cadre défini par les revendications.

En particulier, la couronne des moyens d'entraînement pourra être de tout type, du moment qu'elle est rapportée sur les chapes qui servent par ailleurs à maintenir les barrettes de freinage de la roue. De même la fixation des moyens d'entraînement à la jante pourra être de tout type, du moment que les moyens d'entraînement soient fixés aux chapes maintenant les barrettes de frein, soit directement comme illustré ici au moyen d'un même boulon, soit indirectement, par exemple en attachant les moyens d'entraînement aux barrettes de frein, elle-même fixées sur les chapes de la jante.

## Revendications

1. Roue d'aéronef pourvue de moyens d'entraînement en rotation (10 ;110), les moyens d'entraînement comportant une couronne d'entraînement (11 ;111) associée à des moyens d'attelage (12 ;112) de la couronne à une jante de la roue, la roue étant **caractérisée en ce que** les moyens d'attelage sont fixés à des chapes (19 ;119) de la jante qui maintien par ailleurs des barrettes de frein amovibles(21 ;121) équipant la jante.

2. Roue d'aéronef selon la revendication 1, dans laquelle un même boulon (20 ;120) s'étend pour maintenir à la fois l'un des organes d'attelage de la couronne d'entraînement et une barrette de frein sur l'une des chapes de la jante.

3. Roue d'aéronef selon la revendication 1, dans laquelle la couronne comprend une chaîne (11) et les organes d'attelage comprennent chacun des mâchoires (13,14) adaptées à enserrer des maillons de la chaîne.

4. Roue d'aéronef selon la revendication 3, dans laquelle au moins l'une des mâchoires comporte une patte (17) qui s'étend pour permettre sa fixation à l'une des chapes (19) de la jante.

5. Roue d'aéronef selon la revendication 1, dans laquelle la couronne (111) est une couronne dentée rigide et les organes d'attelage sont venus de matière avec la couronne.

## Patentansprüche

1. Luftfahrzeugrad, das mit Drehantriebsmitteln (10; 110) ausgestattet ist, wobei die Antriebsmittel einen Antriebskranz (11; 111) umfassen, der mit Kopplungsmitteln (12; 112) zur Kopplung des Kranzes mit einer Felge des Rades verbunden ist, wobei das Rad **dadurch gekennzeichnet ist, dass** die Kopplungsmittel an Auflagern (19; 119) der Felge befestigt sind, die darüber hinaus lösbare Bremsstäbe (21; 121) halten, mit denen die Felge ausgestattet ist.

2. Luftfahrzeugrad nach Anspruch 1, wobei sich ein und derselbe Schraubenbolzen (20; 120) so erstreckt, dass er gleichzeitig eines der Kopplungsorgane des Antriebskranzes und einen Bremsstab an einem der Auflager der Felge hält.

3. Luftfahrzeugrad nach Anspruch 1, wobei der Kranz eine Kette (11) umfasst und die Kopplungsorgane jeweils Spannbacken (13, 14) umfassen, die dazu geeignet sind, Glieder der Kette einzuspannen.

4. Luftfahrzeugrad nach Anspruch 3, wobei mindestens eine der Spannbacken eine Halterung (17) umfasst, die sich so erstreckt, dass sie ihre Befestigung an einem der Auflager (19) der Felge ermöglicht.

5. Luftfahrzeugrad nach Anspruch 1, wobei der Kranz (111) ein starrer Zahnkranz ist und die Kopplungsorgane einstückig mit dem Kranz ausgebildet sind.

## Claims

1. Aircraft wheel which is provided with rotational driving means (10; 110), the driving means comprising a driving ring (11; 111) which is associated with means (12; 112) for attaching the ring to a rim of the wheel, the wheel being **characterised in that** the attachment means are fixed to treads (19; 119) of the rim which further serve to retain removable brake blocks (21; 121) with which the rim is provided.

2. Aircraft wheel according to Claim 1, wherein the same bolt (20; 120) extends in order to retain both one of the attachment members of the driving ring and a brake block on one of the treads of the rim.

3. Aircraft wheel according to Claim 1, wherein the ring comprises a chain (11) and the attachment members each comprise jaws (13, 14) which are capable of clamping links of the chain.

4. Aircraft wheel according to Claim 3, wherein at least one of the jaws comprises a lug (17) which extends in order to enable it to be fixed to one of the treads (19) of the rim.

5. Aircraft wheel according to Claim 1, wherein the ring (111) is a rigid toothed ring and the attachment members are integral with the ring.
